# FASCICULE DE BREVET EUROPEEN

(11) **EP 1 773 950 B1**
(45) Date de publication et mention de la délivrance du brevet: **25.06.2014**
(21) Numéro de dépôt: 05781733.0
(22) Date de dépôt: 12.07.2005
(51) Int. Cl.: C09C 3/04, C09C 3/00, C09C 3/08, C09C 1/02

(54) **PROCEDE DE FABRICATION DE PARTICULES PIGMENTAIRES AUTO-LIANTES, SECHES OU EN SUSPENSION OU DISPERSION AQUEUSES, CONTENANT DES MATIERES INORGANIQUES ET DES LIANTS**
VERFAHREN ZUR HERSTELLUNG VON PIGMENTPARTIKELN, DIE SELBSTBINDEND, TROCKEN ODER IN EINER WÄSSRIGEN SUSPENSION ODER DISPERSION SIND UND ANORGANISCHE MATERIALEN UND BINDUNGSMITTEL ENTHALTEN
METHOD FOR PRODUCING PIGMENTARY PARTICLES THAT ARE SELF-BINDING, DRY, OR IN AN AQUEOUS SUSPENSION OR DISPERSION, AND CONTAIN INORGANIC MATERIALS AND BINDING AGENTS

(30) Priorité: 13.07.2004 FR 0407806
(43) Date de publication de la demande: 18.04.2007
(73) Titulaire: Omya International AG, 4665 Oftringen (CH)
(72) Inventeur: GANE, Patrick, CH-4852 Rothrist (CH); SCHOELKOPF, Joachim, CH-8956 Killwangen (CH)
(74) Mandataire: Richebourg, Michel François
(86) Numéro de dépôt international: PCT/IB2005/002762
(87) Numéro de publication internationale: WO 2006/008657

(56) Documents cités:
- EP-A- 1 167 475
- WO-A-03/074786
- WO-A-2004/041882
- FR-A- 2 818 165
- US-A- 5 318 624

## Description

L'invention concerne un procédé de fabrication de particules pigmentaires auto-liantes, sèches ou en suspension ou dispersion aqueuses, contenant au moins une matière inorganique et au moins un liant.

Les particules inorganiques et les liants polymères sont deux des composants essentiels entrant dans la fabrication de divers revêtements ; les particules inorganiques, en général du carbonate de calcium, apportent au produit final certaines propriétés telles que des propriétés optiques, et les liants, en général sous forme de suspensions ou de dispersions de latex, confèrent une cohésion globale à tous les constituants utilisés dans le procédé de fabrication des compositions de revêtements.

Néanmoins, il est bien connu depuis de nombreuses années que des interactions complexes peuvent se produire entre le carbonate de calcium et toutes les formes de liants, conduisant à la modification des propriétés finales des produits de revêtement. Par exemple, « Physical and chemical modifications in latex binders and their effect on the coating colour rheology » (Advanced Coating Fundamentals Symposium, San Diego, CA, United States, May 4-5, 2001, pp. 108-123) concerne l'influence des modifications physiques et chimiques dans une dispersion de liants styrène-butadiène sur le comportement rhéologique d'une composition de revêtement pigmentaire humide.

Depuis longtemps, on a cherché à obtenir le concept de particules pigmentaires auto-liantes : des particules solides contenant un liant polymérique et un pigment inorganique qui agissent comme un matériau unique, évitant ainsi à l'utilisateur final une perte de performances due aux interactions indésirables dans diverses applications.

Il a tout d'abord été mis en avant que de tels pigments auto-liants diffèrent des granulés pigmentaires bien connus, de part la nature des forces qui assurent la cohésion de ces particules composites.

Par exemple, le document WO 01/00712 présente des granulés pigmentaires secs comprenant de 5 % à 99 % en poids de pigment polymère organique, de 0 % à 94,5 % en poids de pigment inorganique et de 0,5 % à 5 % en poids d'un liant ou d'un mélange de liants. De tels granulés sont fabriqués par mélange de tous les constituants en dispersion et par séchage par atomisation de ladite dispersion.

En outre, le document WO 01/00713 décrit des pigments polymères plastiques, applicables sous forme sèche, qui peuvent être creux ou solides, contenant un polymère, un liant et un pigment inorganique.

Comme les inventeurs le mentionnent eux-mêmes, les agglomérats obtenus consistent en des particules sphériques individuelles liées entre elles par des forces électrostatiques.

Selon un point de vue différent, le concept de pigments auto-liants doit être considéré dans ce document comme des particules individuelles reliées entre elles, où les mécanismes de liaison font intervenir non seulement des forces électrostatiques mais aussi des liaisons chimiques créées à travers des mécanismes de chimie sorption, ou des liaisons physiques comme des interactions acide base entre les matières inorganiques et les liants polymériques et des interactions de Lifshitz / van der Waals.

En accord avec ce concept, le document WO 93/11183 décrit un procédé pour préparer des dispersions aqueuses stables en formant deux suspensions aqueuses de matières inorganiques et de particules de latex polymérique, en ajustant le potentiel Zêta des suspensions, et finalement en mélangeant les deux suspensions. La modification du potentiel Zêta peut être réalisée par utilisation d'un additif permettant d'ajuster la charge de surface. Le liant latex polymérique est supposé s'adsorber fortement sur les particules de matière inorganique.

De plus, le document WO 93/12183 enseigne un procédé pour la préparation de dispersions aqueuses de particules composites comprenant un latex et une matière inorganique, utilisées dans les peintures et les revêtements. Lesdites particules de latex polymériques se comportent tel un liant, apportant l'espacement nécessaire entre les particules inorganiques pour conférer de l'opacité et de la brillance au produit final. Le procédé est caractérisé en ce que le latex préparé par polymérisation en émulsion est mélangé à une suspension aqueuse de matières inorganiques, ladite suspension de matières inorganiques étant pré dispersée avec l'acide poly(méth)acrylique ou ses sels, ou des polyélectrolytes copolymères de l'acide (méth)acrylique ou de ses sels. Les auteurs supposent que le dispersant du pigment ne recouvre pas toute la surface des matières inorganiques, et qu'au moins une portion de ladite surface est disponible pour l'adsorption des particules de latex polymériques.

On connaît le document WO 03/074786 qui décrit un procédé de mélange de charges et de liants aboutissant à une suspension contenant un mélange de charges et de liants. Il ne décrit donc pas, ni ne suggère un procédé de co-broyage de charges et de liants aboutissant à des suspensions de particules pigmentaires auto-liantes.

Le document FR 2 818 165 décrit l'utilisation de polymères comme agent d'aide au broyage de pigments et/ou charges minérales en suspension aqueuse et suggère une sélection de la neutralisation de ces polymères pour aboutir à des formulations ayant des propriétés d'opacité améliorées. Il ne décrit et ne suggère aucun co-broyage.

Le document EP 1 167 465 et le document US 5,318,624 emploient un liant mais aussi un agent dispersant. Les suspensions aqueuses obtenues par le procédé du document WO 2004/041822 ne contiennent pas de particules auto-liantes et les agents d'aide au broyage employés n'ont pas de fonctions de liant.

Enfin, le document US 4 025 483 décrit un procédé pour augmenter la stabilité de suspensions aqueuses de dioxyde de titane, par mélange de celles-ci avec des particules de latex polymériques. Selon les exemples, les particules de latex polymériques augmentent l'efficacité de l'agent dispersant qui est contenu dans la suspension initiale de matière inorganique.

Au regard de l'art antérieur, les particules pigments-polymères peuvent être obtenues selon différents procédés qui font toujours référence à l'utilisation d'un troisième constituant, comme un agent dispersant ou un additif permettant d'ajuster la charge de surface, pour formuler les suspensions aqueuses initiales qui contiennent les matières inorganiques d'une part et les composés polymériques d'autre part, et qui sont plus tard mélangées. L'introduction d'un troisième constituant peut avoir pour résultat d'altérer de manière drastique les propriétés finales du revêtement dans lesquels sont incorporés les particules pigments-polymères.

Dans la présente invention, il a été découvert de manière surprenante un procédé pour la préparation de particules pigmentaires auto-liantes, sèches ou en suspension ou dispersion aqueuses, contenant au moins une matière inorganique et au moins un liant polymérique, utilisant un broyeur à billes.

Premièrement, ce procédé est différent du simple mélange écrit dans le document WO 03/74786.

Deuxièmement, le procédé selon l'invention évite à l'homme du métier d'avoir recours à un troisième constituant durant la préparation des suspensions aqueuses contenant les matières inorganiques et les liants, ainsi que pendant l'étape de co-broyage.

De plus et de manière surprenante, les liants ne collent pas et ne bloquent pas le broyeur, de telle façon que l'encrassement de l'équipement peut être correctement contrôlé.

Enfin, un autre objet de l'invention réside dans les particules pigmentaires auto-liantes sous forme sèche obtenues par le procédé selon l'invention, contenant au moins une matière inorganique et au moins un liant.

Le terme liant utilisé dans la présente demande fait référence à tout produit naturel ou synthétique de nature organique, possédant des propriétés liantes. Ces propriétés liantes, qui augmentent les forces de cohésion interparticulaires du minéral de départ, sont déterminées selon la méthode décrite dans l'exemple 1 de la présente demande.

Selon l'objet de l'invention, le procédé pour la préparation de particules pigmentaires auto-liantes, sèches ou en suspension ou dispersion aqueuses, comprend les étapes suivantes :
a) former une ou plusieurs suspensions aqueuses d'au moins une matière inorganique et la ou les introduire dans un broyeur en vue de l'étape c),
b) former ou prendre une ou plusieurs solutions ou suspensions ou émulsions aqueuses d'au moins un liant et la ou les introduire dans un broyeur en vue de l'étape c),
c) co-broyer la ou les suspensions aqueuses obtenues à l'étape a) avec la ou les solutions ou suspensions ou émulsions aqueuses obtenues à l'étape b) de manière à obtenir une suspension aqueuse de particules pigmentaires auto-liantes,
d) éventuellement co-broyer la suspension aqueuse obtenue à l'étape c) avec une ou plusieurs solutions ou suspensions ou émulsions aqueuses d'au moins un liant,
e) éventuellement sécher la suspension aqueuse obtenue à l'étape c) ou à l'étape d).

Selon l'invention, la suspension aqueuse formée à l'étape a) est caractérisée en ce qu'elle contient de 1 % à 80 % en poids sec de matières inorganiques, et plus préférentiellement de 15 % à 60 % en poids sec de matières inorganiques.

La suspension aqueuse formée à l'étape a) peut contenir une ou plusieurs matières inorganiques, notamment des oxydes métalliques, des hydroxydes, des sulfites, des silicates et des carbonates, telles que le carbonate de calcium, les dolomies, le kaolin, le talc, le gypse, le dioxyde de titane, le blanc satin ou le trihydroxyde d'aluminium et leurs mélanges. Préférentiellement, elle contient du carbonate de calcium, sous forme naturelle ou sous forme précipitée, plus préférentiellement du carbonate de calcium naturel, et très préférentiellement un carbonate de calcium naturel choisi parmi la craie, le marbre, la calcite, ou leurs mélanges.

Selon l'invention, la ou les solutions ou suspensions ou émulsions aqueuses formées à l'étape b) sont caractérisées en ce qu'elles contiennent de 1 % à 50 % en poids d'au moins un liant, et plus préférentiellement de 5 % à 20 % en poids d'au moins un liant.

La ou les solutions ou suspensions ou émulsions aqueuses formées à l'étape b) sont également caractérisées en ce que le liant est choisi parmi les latex semi-cristallins, préférentiellement parmi les émulsions de cires de polyéthylène ou les copolymères sous leur forme neutralisée du polyéthylène avec d'autres unités monomères tels que l'acide acrylique ou d'autres monomères ou leurs mélanges, ou parmi les latex en émulsion ou les solutions de liants solubles tels que l'alcool polyvinylique, l'acétate de polyvinyle, l'amidon, la caséine, les protéines, la carboxyméthylcellulose (CMC), l'éthylhydroxyéthylcellulose (EHEC) ou autres, ou leurs mélanges.

Selon cette variante, les latex semi-cristallins sont choisis préférentiellement parmi les émulsions de cire de polyéthylène ou les copolymères sous leur forme neutralisée du polyéthylène avec d'autres unités monomères tels que l'acide acrylique ou d'autres monomères ou leurs mélanges, et les latex en émulsion sont choisis préférentiellement parmi les copolymères d'esters acryliques.

Selon l'étape c) du procédé selon l'invention, la ou les suspensions aqueuses obtenues à l'étape a) et la ou les solutions ou suspensions ou émulsions aqueuses obtenues à l'étape b) sont ensuite co broyées, afin d'obtenir une suspension aqueuse de particules pigmentaires auto-liantes, comprenant au moins une matière inorganique et au moins un liant.

Selon l'étape d) du procédé selon l'invention, la suspension aqueuse de particules pigmentaires auto-liantes obtenue à l'étape c) est ensuite co-broyée avec une ou plusieurs solutions ou suspensions ou émulsions aqueuses comprenant au moins un liant.

La Demanderesse a pu observer que les liants s'adsorbent à la surface des matières minérales, créant ainsi des liaisons chimiques et physiques caractéristiques de particules auto-liantes, sans avoir recours à un agent dispersant ou un tiers additif, comme l'illustrent les figures des différents exemples.

Le procédé de co broyage est réalisé par toutes les techniques bien connues de l'homme du métier.

Selon l'invention, la suspension aqueuse obtenue à l'étape c) ou à l'étape d) est caractérisée en ce que le ratio entre les matières inorganiques et les liants contenus dans la suspension obtenue est compris entre 99 et 1 exprimé en parts de poids, et plus préférentiellement entre 70 et 30 exprimé en parts de poids.

De manière préférentielle, la composition de ladite suspension aqueuse est comprise entre 5 % et 80 % en poids de matières inorganiques, entre 1 % et 30 % en poids de liants, et entre 19 % et 94 % en poids d'eau. Plus préférentiellement, ladite suspension aqueuse contient entre 20 % et 40 % en poids de matières inorganiques, entre 5 % et 20 % en poids de liants, et entre 40 % et 75 % en poids d'eau.

De plus, selon une variante du procédé selon l'invention, une forme préférentielle de la suspension aqueuse formée à l'étape c) ou à l'étape d), est caractérisée en ce que les particules pigmentaires auto-liantes ont un diamètre moyen de particules compris entre 0,1 µm et 10 µm, et préférentiellement entre 0,1 µm et 2 µm, mesurée au moyen d'un granulomètre MasterSizer™ S commercialisé par la société MALVERN.

Cette suspension ou dispersion aqueuse obtenue à l'étape c) du procédé selon l'invention est auto-liante, telle que le démontre l'exemple 1.

Une variante possible du procédé selon l'invention se caractérise en ce qu'après l'étape c) ou l'étape éventuelle d), suivent les deux étapes :
f) d'augmentation de la concentration de la suspension aqueuse obtenue à l'étape c) ou d) par concentration thermique ou mécanique ;
g) de dispersion de la suspension aqueuse obtenue à l'étape f) par la mise en oeuvre d'au moins un agent dispersant et/ou d'au moins un agent mouillant.

Selon cette variante, ledit ou lesdits agents dispersants sont sélectionnés parmi les polymères et/ou les copolymères acryliques ou vinyliques ou allyliques, tels que par exemple les homopolymères ou les copolymères, dans leur forme totalement acide ou partiellement neutralisés ou totalement neutralisés, par des agents de neutralisation contenant des cations monovalents ou polyvalents ou des amines ou leurs mélanges, d'au moins un des monomères tels que les acides acrylique et/ou méthacrylique, itaconique, crotonique, fumarique, l'anhydride maléïque ou l'acide isocrotonique, aconitique, mésaconique, sinapique, undécylénique, l'acide angélique, et/ou leurs esters respectifs comme les acrylates ou méthacrylates d'alkyle, d'aryle, d'alkylaryle, d'arylalkyle et en particulier comme l'acrylate d'éthyle, l'acrylate de butyle, le méthacrylate de méthyle, l'acide acrylamido méthyl propane sulfonique, l'acrylamide et/ou le méthacrylamide, le phosphate d'acrylate d'éthylène glycol, le phosphate de méthacrylate d'éthylène glycol, le phosphate d'acrylate de propylène glycol, le phosphate de méthacrylate de propylène glycol, le chlorure ou le sulfate de méthacrylamido propyle triméthyle ammonium, le chlorure d'éthyle ou le sulfate de méthacrylate de triméthyle ammonium, ainsi que leurs homologues acrylate et acrylamide, quaternisés ou non, et/ou le chlorure de diméthyldiallyle, la vinylpyrrolidone, le vinylcaprolactame, le diisobutylène, l'acétate de vinyle, le styrène, l'alpha-methyl-styrène, le styrène sulfonate de sodium, le vinylméthylether, l'allylamine.

Ce ou ces agents dispersants peuvent aussi être choisis parmi au moins un desdits monomères ou leurs mélanges, polymérisés en présence d'au moins une matière minérale.

En outre, il faut noter que l'optimisation du poids moléculaire de cet ou de ces agents dispersants dépend de leur nature chimique.

En outre, ladite dispersion aqueuse de particules pigmentaires auto-liantes contient entre 0,01 % et 2 % en poids d'agents dispersants.

Selon cette variante, la dispersion aqueuse de particules pigmentaires auto-liantes contient entre 0,01 % et 5 % en poids d'agents de mouillage.

Dans une dernière étape e) du procédé selon l'invention, la suspension ou la dispersion aqueuse obtenue à l'étape c) ou à l'étape d) peut être séchée, de manière à obtenir des particules pigmentaires auto-liantes sous forme sèche, contenant au moins une matière inorganique et au moins un liant, et éventuellement au moins un agent dispersant et au moins un agent de mouillage.

Cette étape est réalisée par toute méthode de séchage connue, et préférentiellement par une méthode de séchage par atomisation en milieu dilué.

Dans le procédé selon l'invention, le résultat de l'étape e) consiste en des particules pigmentaires auto-liantes sous forme sèche, contenant au moins une matière inorganique et au moins un liant, caractérisées en ce qu'elles contiennent entre 70 % et 97,5 % en poids de matières inorganiques, et entre 2,5 % et 30 % en poids de liants, et plus préférentiellement entre 85 % et 95 % en poids de matières inorganiques et entre 5 % et 15 % en poids de liants.

De plus, dans une variante et selon une forme préférée, le diamètre moyen desdites particules pigmentaires auto-liantes est compris entre 5 µm et 100 µm, et plus préférentiellement entre 10 µm et 30 µm, mesuré au moyen d'un granulomètre MasterSizer™ S commercialisé par la société MALVERN.

L'invention va maintenant être illustrée à travers des exemples qui ne sauraient en limiter la portée.

### Exemple 1

Cet exemple concerne le procédé de préparation de particules pigmentaires auto-liantes en suspension aqueuse à partir de marbre et de deux suspensions de liants.

Pour ce faire, la première étape a) du procédé consiste à former une suspension aqueuse de 1000 grammes en poids sec de marbre ayant un diamètre de particule moyen de 0,8 µm en mettant en suspension le marbre dans l'eau à une teneur en poids de matière sèche égale à 20 %.

On effectue ensuite l'étape b) du procédé par dilution d'une suspension aqueuse de liant Acronal™ S728 commercialisé par la société BASF jusqu'à une teneur en poids de matière sèche égale à 20 %.

L'étape c) est réalisée par introduction successive de la suspension de marbre et la suspension de liant dans un broyeur du type Dyno-Mill™ avec un cylindre fixe, un impulseur tournant, et dont le corps broyant consiste en des billes de verre avec un diamètre compris entre 1,0 mm et 1,4 mm.

Après 16 minutes de broyage, on procède ensuite à l'étape d) par ajout dans le broyeur d'une deuxième suspension aqueuse de liant obtenue par dilution, jusqu'à une teneur en poids de matière sèche égale à 20 % du Polygen™ WE4 commercialisé par la société BASF.

Le volume total occupé par le corps broyant est égal à 460 cm³ alors que son poids est égal à 820 g.

La chambre de broyage a un volume de 600 cm³.

La vitesse circonférentielle du broyeur est de 10 m.s⁻¹.

La suspension de carbonate de calcium est recyclée à un taux de 33 litres / heure.

La température durant chaque test de broyage est maintenue approximativement à 25 C.

A la fin du broyage (85 minutes), un échantillon de la suspension obtenue de particules pigmentaires auto-liantes est retiré dans un flacon. La granulométrie de la suspension est mesurée à l'aide d'un granulomètre MasterSizer™ S commercialisé par la société MALVERN™ et est telle que 85 % des particules ont un diamètre moyen inférieur ou égal à 1 µm.

Le produit ainsi obtenu est une suspension aqueuse de particules pigmentaires auto-liantes possédant une teneur en poids de matière sèche en carbonate de calcium égale à 20 %, un diamètre moyen de particules égal à 0,5 µm mesuré à l'aide d'un granulomètre MasterSizer™ S, et un ratio marbre / Acronal™ S728 / Polygen™ WE4 égal à 100 / 9,5 / 0,5 en parts en poids de matière sèche.

Dans cet exemple, l'illustration de la différence entre le couplage minéral-liant des particules pigmentaires auto-liantes d'une part, et pour un simple mélange d'autre part, est illustrée en utilisant un appareil d'analyse thermique différentielle (ATD) TGA/SDTA 851e, commercialisé par la société METTLER TOLEDO™. Les conditions de chauffage étant : une montée en température de 5 °C par minute, de 25 C à 350 °C.

En comparaison, on a réalisé les mêmes mesures sur les produits purs (marbre et liant).

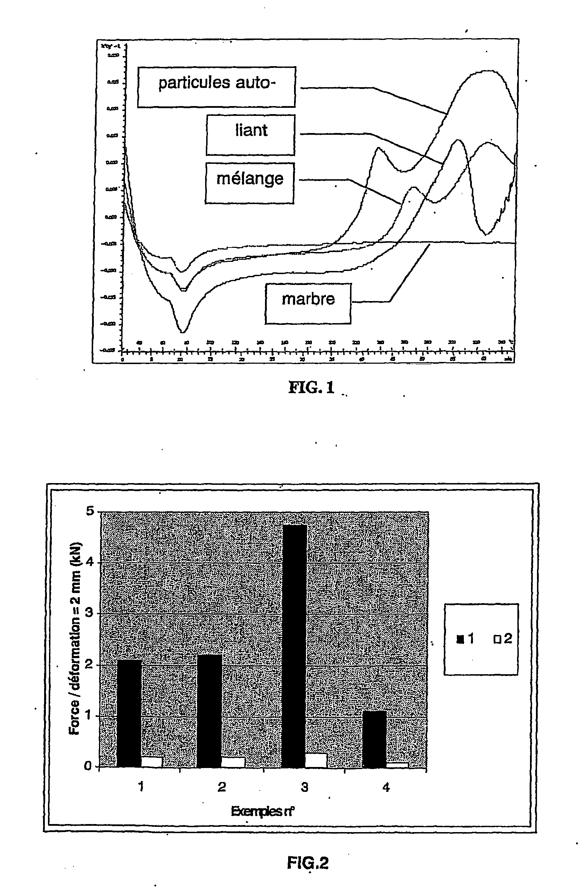

La figure 1 illustre la différence entre le couplage minéral-liant des particules pigmentaires auto-liantes selon l'invention, et un simple mélange minéral-liant.

Pour démontrer l'aptitude au caractère auto-liant des particules pigmentaires ainsi obtenues, des comprimés ont été formulés au moyen d'un procédé de filtration par membrane.

On utilise un appareil du type filtre-presse à haute pression, fabriqué à partir d'un tube creux en acier. Ledit tube est fermé en haut par un couvercle et contient en bas la membrane de filtration.

On introduit alors un volume de 80 ml soit d'une suspension contenant uniquement la matière inorganique (et qui sert à fabriquer les échantillons de référence) soit d'une suspension selon l'invention (et qui sert à fabriquer les échantillons à tester).

On applique alors une pression constante de 15 bars qui permet d'éliminer l'eau, jusqu'à obtenir un comprimé ayant une épaisseur de 20 mm.

Les échantillons sont ensuite séchés à l'air libre pendant 1 semaine.

Le dispositif et la méthode utilisés sont décrits en détails dans le document « Modified calcium carbonate coatings with rapid absorption and extensive liquid update capacity » (Colloids and Surfaces A, 236 (1-3), 2003, pp. 91-102),

Les blocs solides quasi-cylindriques de particules pigmentaires ont été broyés en utilisant un broyeur à disque (Jean Wirtz, Phoenix 4000) sous forme d'échantillons à la forme de disques de diamètre 25 mm et d'épaisseur approximative 15 mm. La procédure est décrite dans le document « Fluid transport into porous coating structures : some novel findings » (Tappi Journal, 83 (5), 2000, pp. 77-78).

Les échantillons obtenus ont subi un test de résistance à l'écrasement sur une machine de tension Zwick-Roell avec une unité de contrôle WN158988 utilisant un système tige/plat (avec un bout semisphérique). La force de la cellule est de 20 kN.

Les échantillons sont écrasés à une vitesse de 3 mm.min⁻¹ sur une longueur de 10 mm. Les valeurs de la force pour une déformation de 2 mm sont illustrées sur la figure 2 pour cet exemple et les exemples suivants.

La figure 2 illustre le pouvoir auto-liant pour les particules pigmentaires auto-liantes selon l'invention: mesure de la force lors du test à l'écrasement pour une déformation de 2 mm pour :
- des échantillons d'une suspension de particules pigmentaires auto-liantes selon l'invention,
- des échantillons formulés selon la méthode décrite dans l'exemple 1 à partir d'une suspension aqueuse contenant uniquement la matière minérale utilisée dans l'invention (2)

La figure 2 démontre clairement que le procédé selon l'invention permet d'obtenir des particules pigmentaires auto-liantes, où les forces de cohésion interparticulaires entre les particules minérales sont beaucoup plus élevées que dans le cas de la matière minérale initiale. On observe ce phénomène pour l'exemple 1, mais aussi pour les exemples 2 à 4 qui vont être décrits ultérieurement.

Les tableaux 1 et 1 bis indiquent la répartition granulométrique des particules selon l'invention, et des particules minérales initiales.

**Tableau 1 : répartition granulométrique telle que mesurée à l'aide d'un granulomètre MasterSizer™ S commercialisé par la société MALVERN™ dans le cas de la suspension de particules pigmentaires auto-liantes obtenue à partir du procédé selon l'invention (1), à l'aide d'un Sedigraph™ 5100 commercialisé par la société MICROMERITICS dans le cas de la suspension de matière inorganique de départ (2).**

| **Taille de particules (µm)** | **Quantité de particules en volume (%) (1)** | **Quantité de particules en volume (%) (2)** |
|---|---|---|
| < 71 | 100 | 100 |
| < 45 | 100 | 100 |
| < 25 | 100 | 100 |
| < 10 | 100 | 99 |
| < 5 | 100 | 96 |
| < 2 | 98 | 84 |
| < 1 | 85 | 59 |
| < 0.7 | 71 | |
| < 0.5 | 52 | 24 |
| < 0.2 | 4 | 6 |
| < 0.1 | 0 | 1 |

**Tableau 1 bis : valeur des paramètres D₅₀ (%) et D₉₀ (%) (mesures du diamètre pour lequel respectivement 50 % et 90 % en volume des particules possèdent un diamètre inférieur ou égal à cette valeur pour :**

| | 1 | 2 |
|---|---|---|
| D₅₀ (%) | 0,48 | 0,85 |
| D₉₀ (%) | 1,21 | - |

- les particules pigmentaires auto-liantes obtenue à partir du procédé selon l'invention (1)
- la matière inorganique de départ (2)

Les tableaux 1 et 1 bis démontrent une réduction notable des tailles de particules, dans le cas des particules pigmentaires auto-liantes obtenues selon l'invention, par rapport à la matière inorganique initiale.

### Exemple 2

Cet exemple concerne le procédé de préparation de particules pigmentaires auto-liantes en suspension aqueuse à partir de marbre et d'un liant styrène-butadiène.

Pour cela, la première étape a) du procédé consiste à former une suspension aqueuse de marbre ayant un diamètre moyen de particules de 0,85 µm, en mettant en suspension le marbre dans l'eau à une teneur en poids de matière sèche égale à 20 %.

Pour la deuxième étape b) du procédé, on utilise une suspension aqueuse de liant DL 966 de DOW CHEMICALS à une teneur en poids de 50 %.

Ensuite, on procède à l'étape c) du procédé en co-broyant la suspension de marbre obtenue à l'étape a) avec la suspension de liant obtenue à l'étape b) avec le même matériel que celui utilisé dans l'exemple1.

A la fin du broyage (30 minutes), un échantillon de la suspension obtenue de particules pigmentaires auto-liantes est retiré dans un flacon. La granulométrie de la suspension est mesurée à l'aide d'un granulomètre MasterSizer™ S commercialisé par la société MALVERN™ et est telle que 75 % des particules ont un diamètre moyen inférieur ou égal à 1 µm.

Le produit ainsi obtenu est une suspension aqueuse de particules pigmentaires auto-liantes possédant une teneur en poids de matière sèche en carbonate de calcium égale à 21 %, un diamètre moyen de particules égale à 0,65 µm mesuré à l'aide d'un granulomètre MasterSizer™ S commercialisé par la société MALVERN™ et un ratio carbonate de calcium / liant égal à 100 / 10 en parties en poids.

Le pouvoir liant desdites particules a été mesuré par un test d'écrasement selon la méthode décrite dans l'exemple 1, et est illustré sur la figure 2. Celle-ci démontre que le procédé selon l'invention permet d'obtenir des particules pigmentaires auto-liantes, où les forces de cohésion interparticulaires entre les particules minérales sont beaucoup plus élevées que dans le cas de la matière minérale initiale.

Les tableaux 2 et 2 bis indiquent la répartition granulométrique des particules selon l'invention, et des particules minérales initiales.

**Tableau 2 : répartition granulométrique telle que mesurée à l'aide d'un granulomètre MasterSizer™ S commercialisé par la société MALVERN™ dans le cas de la suspension de particules pigmentaires auto-liantes obtenue à partir du procédé selon l'invention (1), à l'aide d'un Sedigraph™ 5100 commercialisé par la société MICROMERITICS dans le cas de la suspension de matière inorganique de départ (2)**

| **Taille de particules (µm)** | **Quantité de particules en volume (%) (1)** | **Quantité de particules en volume (%) (2)** |
|---|---|---|
| < 71 | 100 | 100 |
| < 45 | 100 | 100 |
| < 25 | 100 | 100 |
| < 10 | 100 | 99 |
| < 5 | 100 | 96 |
| < 2 | 98 | 84 |
| < 1 | 75 | 59 |
| < 0,7 | 54 | |
| < 0,5 | 35 | 24 |
| < 0,2 | 5 | 6 |
| < 0,1 | 1 | 1 |

**Tableau 2 bis : valeur des paramètres D₅₀ (%) et D₉₀ (%) (mesures du diamètre pour lequel respectivement 50 % et 90 % en volume des particules possèdent un diamètre inférieur ou égal à cette valeur) pour :**

| | 1 | 2 |
|---|---|---|
| D₅₀ (%) | 0,65 | 0,85 |
| D₉₀ (%) | 2,00 | |

- les particules pigmentaires auto-liantes obtenue à partir du procédé selon l'invention (1)
- la matière inorganique de départ (2)

Les tableaux 2 et 2 bis démontrent une réduction notable des tailles de particules, dans le cas des particules pigmentaires auto-liantes obtenues selon l'invention, par rapport à la matière inorganique initiale.

### Exemple 3

Cet exemple concerne le procédé de préparation de particules pigmentaires auto-liantes en suspension aqueuse à partir de carbonate de calcium précipité (PCC) et de deux suspensions de liants.

Pour ce faire, la première étape du procédé a) consiste à réaliser une suspension aqueuse de carbonate de calcium précipité ayant un diamètre moyen de 1,8 µm, en mettant en suspension le carbonate de calcium précipité dans l'eau à une teneur en poids de matière sèche égale à 20 %.

Pour la deuxième étape b) du procédé, on utilise une première suspension aqueuse de liant Acronal™ S728 commercialisé par la société BASF à une teneur en poids de matière sèche égale à 20 % et une deuxième suspension aqueuse de liant Polygen™ WE4 commercialisé par la société BASF à une teneur en poids de matière sèche égale à 20 %.

Ensuite, les trois suspensions sont co-broyées avec le même matériel que celui de l'exemple 1.

A la fin du broyage (30 minutes), un échantillon de la suspension obtenue de particules pigmentaires auto-liantes est retiré dans un flacon. La granulométrie de la suspension est mesurée à l'aide d'un granulomètre MasterSizer™ S commercialisé par la société MALVERN™ et est telle que 83 % des particules ont un diamètre moyen inférieur ou égal à 1 µm.

Le produit ainsi obtenu est une suspension aqueuse de particules pigmentaires auto-liantes possédant une teneur en poids de matière sèche en carbonate de calcium précipité égale à 20 %, un diamètre moyen de particules égale à 0,53 µm mesuré à l'aide d'un granulomètre MasterSizer™ S commercialisé par la société MALVERN™ et un ratio PCC / Acronal™ S728 / Polygen™ WE4 égal à 100 / 9,5 / 0,5 en parts en poids de matière sèche.

Le pouvoir liant desdites particules a été mesuré par un test d'écrasement selon la méthode décrite dans l'exemple 1, et est illustré sur la figure 2. Celle-ci démontre que le procédé selon l'invention permet d'obtenir des particules pigmentaires auto-liantes, où les forces de cohésion interparticulaires entre les particules minérales sont beaucoup plus élevées que dans le cas de la matière minérale initiale.

Les tableaux 3 et 3 bis indiquent la répartition granulométrique des particules selon l'invention, et des particules minérales initiales.

**Tableau 3: répartition granulométrique telle que mesurée à l'aide d'un granulomètre MasterSizer™ S commercialisé par la société MALVERN™ dans le cas de la suspension de particules pigmentaires auto-liantes obtenue à partir du procédé selon l'invention (1), à l'aide d'un Sedigraph™ 5100 commercialisé par la société MICROMERITICS dans le cas de la suspension de matière inorganique de départ (2)**

| **Taille de particules (µm)** | **Quantité de particules en volume (%) (1)** | **Quantité de particules en volume (%) (2)** |
|---|---|---|
| < 71 | 100 | 100 |
| < 45 | 100 | 100 |
| < 25 | 100 | 100 |
| < 10 | 100 | 100 |
| < 5 | 100 | 96 |
| < 2 | 98 | 59 |
| < 1 | 83 | 38 |
| < 0,7 | 65 | 29 |
| < 0,5 | 47 | 21 |
| < 0,2 | 9 | 5 |
| < 0,1 | 1 | 1 |

**Tableau 3 bis : valeur des paramètres D₅₀ (%) et D₉₀ (%) (mesures du diamètre pour lequel respectivement 50 % et 90 % en volume des particules possèdent un diamètre inférieur ou égal à cette valeur) pour :**

| | **1** | **2** |
|---|---|---|
| D₅₀ (%) | 0,53 | 1,57 |
| D₉₀ (%) | 2,00 | 6,0 |

- les particules pigmentaires auto-liantes obtenue à partir du procédé selon l'invention (1)
- la matière inorganique de départ (2)

Les tableaux 3 et 3 bis démontrent une réduction notable des tailles de particules, dans le cas des particules pigmentaires auto-liantes obtenues selon l'invention, par rapport à la matière inorganique initiale.

### Exemple 4

Cet exemple concerne le procédé de préparation de particules pigmentaires auto-liantes en suspension aqueuse à partir d'un mélange de talc et de dioxyde de titane et d'une solution de liants obtenue par mélange d'amidon et d'alcool polyvinylique.

Pour ce faire, la première étape a) du procédé selon l'invention consiste à réaliser une suspension aqueuse de talc ayant un diamètre moyen de 13 µm et de dioxyde de titane ayant un diamètre moyen inférieur à 0,2 µm, en mettant en suspension le talc et le dioxyde de titane (dans un rapport 1:1 en poids sec) dans l'eau à une teneur en poids de matière sèche égale à 48 %.

L'étape b) du procédé selon l'invention est effectuée en diluant une suspension aqueuse d'alcool polyvinylique Mowiol™ 4-88 commercialisé par la société OMYA Peralta jusqu'à une teneur en poids de matière sèche égale à 34 %, sous agitation pendant 20 minutes et à une température de 90 °C et en préparant une solution d'amidon à une teneur en matière sèche égale à 22 % sous agitation pendant 20 minutes et à une température de 90 °C.

Ensuite, la suspension résultante est co-broyée avec le même matériel que dans l'exemple 1.

A la fin du broyage (30 minutes), un échantillon de la suspension obtenue de particules pigmentaires auto-liantes est retiré dans un flacon. La granulométrie de la suspension est mesurée à l'aide d'un granulomètre MasterSizer™ S commercialisé par la société MALVERN™ et est telle que 28 % des particules ont un diamètre moyen inférieur ou égal à 1 µm.

Le produit ainsi obtenu est une suspension aqueuse de particules pigmentaires auto-liantes possédant une teneur en poids de matière sèche en talc et dioxyde de titane égale à 37 %, un diamètre moyen de particules égale à 46 µm mesuré à l'aide d'un granulomètre MasterSizer™ S commercialisé par la société MALVERN™ et un ratio talc et dioxyde de titane / liants polymériques égal à 100 / 10 en parties en poids.

Le pouvoir liant desdites particules a été mesuré par un test d'écrasement selon la méthode décrite dans l'exemple 1, et est illustré sur la figure 2. Celle-ci démontre que le procédé selon l'invention permet d'obtenir des particules pigmentaires auto-liantes, où les forces de cohésion interparticulaires entre les particules minérales sont beaucoup plus élevées que dans le cas de la matière minérale initiale.

Les tableaux 4 et 4 bis indiquent la répartition granulométrique des particules selon l'invention, et des particules minérales initiales.

**Tableau 4: répartition granulométrique telle que mesurée à l'aide d'un granulomètre MasterSizer™ S commercialisé par la société MALVERN™ dans le cas de la suspension de particules pigmentaires auto-liantes obtenue à partir du procédé selon l'invention (1), à l'aide d'un Sedigraph™ 5100 commercialisé par la société MICROMERITICS dans le cas de la suspension de matière inorganique de départ (2)**

| **Taille de particules (µm)** | **Quantité de particules en volume (%) (1)** | **Quantité de particules en volume (%) (2)** |
|---|---|---|
| < 71 | 100 | 99 |
| < 45 | 97 | 91 |
| < 25 | 86 | 70 |
| < 10 | 54 | 41 |
| < 5 | 37 | 32 |
| < 2 | 29 | 27 |
| < 1 | 28 | 25 |
| < 0,7 | 27 | 23 |
| < 0,5 | 24 | 20 |
| < 0,2 | 5 | 6 |
| < 0,1 | | 1 |

**Tableau 4 bis : valeur des paramètres D₅₀ (%) et D₉₀ (%) (mesures du diamètre pour lequel respectivement 50 % et 90 % en volume des particules possèdent un diamètre inférieur ou égal à cette valeur) pour :**

| | 1 | 2 |
|---|---|---|
| D₅₀ (%) | 8,9 | 14,3 |
| D₉₀ (%) | 9,0 | 15,0 |

- les particules pigmentaires auto-liantes obtenue à partir du procédé selon l'invention (1)
- la matière inorganique de départ (2)

Les tableaux 4 et 4 bis démontrent une réduction notable des tailles de particules, dans le cas des particules pigmentaires auto-liantes obtenues selon l'invention, par rapport à la matière inorganique initiale.

### Exemple 5

Cet exemple illustre une variante du procédé de préparation selon l'invention de particules pigmentaires auto-liantes en suspension aqueuse à partir de marbre et de deux suspensions de liants.

Pour ce faire, on réalise avec le même matériel et les mêmes conditions opératoires que dans l'exemple 1, la suspension aqueuse de particules pigmentaires auto-liantes de l'exemple 1, possédant une teneur en poids de matière sèche en carbonate de calcium égale à 20 %, un diamètre moyen de particules égal à 0,50 µm mesuré à l'aide d'un granulomètre MasterSizer™ S, et un ratio marbre /Acronal™ S728 / Polygen™ WE4 égal à 100/9,5/0,5 en parts en poids de matière sèche.

Une fois obtenue cette suspension aqueuse de particules pigmentaires auto-liantes, on introduit cette suspension dans une centrifugeuse de type Rouan YXY tournant à une vitesse de 5500 tour/min afin d'en augmenter sa concentration en matière sèche.

Après 6 minutes de centrifugation, la suspension aqueuse obtenue a une teneur en matière sèche égale à 58 %.

Une fois obtenue, cette suspension aqueuse concentrée de particules pigmentaires auto-liantes, on réalise la dispersion de cette suspension à l'aide d'un agitateur Pendraulik™ tournant à une vitesse égale à 3000 tours/min et en ajoutant consécutivement 0,5 % en poids sec par rapport au poids sec de particules pigmentaires d'un agent de mouillage, copolymère styrène / acrylate de butyle / acide méthacrylique / acide acrylique et 0,1 % en poids sec par rapport au poids sec de particules pigmentaires d'un agent dispersant, copolymère acide acrylique / anhydride maléique, puis la quantité d'eau nécessaire pour obtenir une concentration en matière sèche égale à 55 %.

La viscosité Brookfield™ obtenue est alors égale à 106 mPa.s à 100 tours/min.

### Exemple 6

Cet exemple illustre encore une autre variante du procédé selon l'invention.

Pour ce faire, on réalise avec le même matériel et les mêmes conditions opératoires que dans l'exemple 1, la suspension aqueuse de particules pigmentaires auto-liantes de l'exemple 1, possédant une teneur en poids de matière sèche en carbonate de calcium égale à 20 %, un diamètre moyen de particules égal à 0,50 µm mesuré à l'aide d'un granulomètre MasterSizer™ S, et un ratio marbre /Acronal™ S728 / Polygen™ WE4 égal à 100/9,5/0,5 en parts en poids de matière sèche.

Une fois réalisée cette suspension de particules pigmentaires auto-liantes, on met en oeuvre un filtre presse afin d'augmenter la concentration en matière sèche de la suspension jusqu'à une valeur égale à 65,4 %.

Une fois obtenue cette suspension aqueuse concentrée de particules pigmentaires auto-liantes, on réalise la dispersion de cette suspension à l'aide d'un agitateur Pendraulik™ tournant à une vitesse égale à 3000 tours/min et en ajoutant consécutivement 0,17 % en poids sec, par rapport au poids sec de particules pigmentaires, d'un agent mouillant (Tamol™ NN9104) et 0,59 % en poids sec, par rapport au poids sec de particules pigmentaires, d'un agent dispersant (Coatex P70).

La viscosité Brookfield™ mesurée après 14 jours de stockage, est égale à 1630 mPa.s à 100 tours/min.

## Revendications

1. Procédé de préparation de particules pigmentaires auto-liantes, sèches ou en suspension ou dispersion aqueuses, comprenant les étapes suivantes :
a) former une ou plusieurs suspensions aqueuses d'au moins une matière inorganique et la ou les introduire dans un broyeur en vue de l'étape c)
b) former ou prendre une ou plusieurs solutions ou suspensions ou émulsions aqueuses d'au moins un liant et la ou les introduire dans un broyeur en vue de l'étape c)
c) co-broyer la ou les suspensions aqueuses obtenues à l'étape a) avec la ou les solutions ou suspensions ou émulsions aqueuses obtenues à l'étape b) de manière à obtenir une suspension aqueuse de particules pigmentaires auto-liantes
d) éventuellement co-broyer la suspension aqueuse obtenue à l'étape c) avec une ou plusieurs solutions ou suspensions ou émulsions aqueuses d'au moins un liant
e) éventuellement sécher la suspension aqueuse obtenue à l'étape c) ou à l'étape d)

2. Procédé selon la revendication 1 **caractérisé en ce que** la ou les suspensions aqueuses de matières inorganiques formées à l'étape a) contiennent de 1 % à 80 % en poids sec de matières inorganiques.

3. Procédé selon la revendication 2 **caractérisé en ce que** la ou les suspensions aqueuses de matières inorganiques formées à l'étape a) contiennent de 15 % à 60 % en poids sec de matières inorganiques.

4. Procédé selon l'une des revendications 1 à 3 **caractérisé en ce que** ladite ou lesdites suspensions aqueuses de matières inorganiques formées à l'étape a) contiennent une ou plusieurs matières inorganiques.

5. Procédé selon la revendication 4 **caractérisé en ce que** ladite ou lesdites matières inorganiques sont choisies parmi les oxydes métalliques, les hydroxydes, les sulfites, les silicates et les carbonates, telles que le carbonate de calcium, les dolomies, le kaolin le talc, le gypse, le dioxyde de titane, le blanc satin ou le trihydroxyde d'aluminium et leurs mélanges.

6. Procédé selon la revendication 5 **caractérisé en ce que** ladite ou lesdites matières inorganiques sont choisies parmi des carbonates de calcium sous forme naturelle ou sous forme précipitée ou leurs mélanges.

7. Procédé selon la revendication 6 **caractérisé en ce que** ladite ou lesdites matières inorganiques sont un carbonate de calcium naturel choisi parmi la craie, le marbre, la calcite, ou leurs mélanges.

8. Procédé selon l'une des revendications 1 à 7 **caractérisé en ce que** la ou les solutions ou suspensions ou émulsions aqueuses d'au moins un liant formées à l'étape b) contiennent de 1 % à 50 % en poids d'au moins un liant, et plus préférentiellement de 5 % à 20 % en poids d'au moins un liant.

9. Procédé selon l'une des revendications 1 à 8 **caractérisé en ce que** le ou les liants de l'étape b sont choisis parmi les latex semi-cristallins, ou parmi les latex en émulsion ou les solutions de liants solubles tels que l'alcool polyvinylique, l'acétate de polyvinyle, l'amidon, la caséine, les protéines, la carboxyméthylcellulose (CMC), l'éthylhydroxyéthylcellulose (EHEC), ou leurs mélanges.

10. Procédé selon la revendication 9 **caractérisé en ce que** les latex semi-cristallins sont choisis préférentiellement parmi les émulsions de cires de polyéthylène ou les copolymères sous leur forme neutralisée du polyéthylène avec d'autres unités monomères tels que l'acide acrylique ou d'autres monomères ou leurs mélanges.

11. Procédé selon la revendication 9 **caractérisé en ce que** les latex en émulsion sont choisis parmi les copolymères d'esters acryliques.

12. Procédé selon l'une des revendications 1 à 11 **caractérisé en ce que** la suspension formée à l'étape c) possède un ratio entre les matières inorganiques et les liants contenus dans la suspension obtenue compris entre 99 et 1 exprimé en parts de poids.

13. Procédé selon la revendication 12 **caractérisé en ce que** le ratio entre les matières inorganiques et les liants contenus dans la suspension obtenue est compris entre 70 et 30 exprimé en parts de poids.

14. Procédé selon l'une des revendications 1 à 13 **caractérisé en ce que** les particules pigmentaires auto-liantes ainsi formées ont un diamètre moyen de particules compris entre 0,1 µm et 10 µm mesuré au moyen d'un granulomètre MasterSizer™ S commercialisé par la société MALVERN.

15. Procédé selon la revendication 14 caractérisé en ce les particules pigmentaires auto-liantes ainsi formées ont un diamètre moyen de particules compris entre 0,1 µm et 2 µm, mesuré au moyen d'un granulomètre MasterSizer™ S commercialisé par la société MALVERN.

16. Procédé selon l'une des revendications 1 à 15 **caractérisé en ce qu'**il comprend les étapes suivantes :
a) former une ou plusieurs suspensions aqueuses d'au moins une matière inorganique et la ou les introduire dans un broyeur en vue de l'étape c)
b) former ou prendre une ou plusieurs solutions ou suspensions ou émulsions aqueuses d'au moins un liant et la ou les introduire dans un broyeur en vue de l'étape c)
c) co-broyer la ou les suspensions aqueuses obtenues à l'étape a) avec la ou les solutions ou suspensions ou émulsions aqueuses obtenues à l'étape b) de manière à obtenir une suspension aqueuse de particules pigmentaires auto-liantes
d) éventuellement co-broyer la suspension aqueuse obtenue à l'étape c) avec une ou plusieurs solutions ou suspensions ou émulsions aqueuses d'au moins un liant
f) augmenter la concentration de la suspension aqueuse obtenue à l'étape c) ou d) par une méthode de concentration thermique ou mécanique,
g) disperser la suspension aqueuse obtenue à l'étape f) à l'aide d'au moins un agent dispersant et/ou au moins un agent mouillant.

17. Procédé selon la revendication 16, **caractérisé en ce que** le ou les agents dispersants sont choisis parmi les polymères et/ou les copolymères acryliques ou vinyliques ou allyliques, tels que les homopolymères ou les copolymères, dans leur forme totalement acide ou partiellement neutralisés ou totalement neutralisés, par des agents de neutralisation contenant des cations monovalents ou polyvalents ou des amines ou leurs mélanges, d'au moins un des monomères tels que les acides acrylique et/ou méthacrylique, itaconique, crotonique, fumarique, l'anhydride maléïque ou l'acide isocrotonique, aconitique, mésaconique, sinapique, undécylénique, l'acide angélique, et/ou leurs esters respectifs comme les acrylates ou méthacrylates d'alkyle, d'aryle, d'alkylaryle, d'arylalkyle et en particulier comme l'acrylate d'éthyle, l'acrylate de butyle, le méthacrylate de méthyle, l'acide acrylamido méthyl propane sulfonique, l'acrylamide et/ou le méthacrylamide, le phosphate d'acrylate d'éthylène glycol, le phosphate de méthacrylate d'éthylène glycol, le phosphate d'acrylate de propylène glycol, le phosphate de méthacrylate de propylène glycol, le chlorure ou le sulfate de méthacrylamido propyle triméthyle ammonium, le chlorure d'éthyle ou le sulfate de méthacrylate de triméthyle ammonium, ainsi que leurs homologues acrylate et acrylamide, quatemisés ou non, et/ou le chlorure de diméthyldiallyle, la vinylpyrrolidone, le vinylcaprolactame, le diisobutylène, l'acétate de vinyle, le styrène, l'alpha-methyl-styrène, le styrène sulfonate de sodium, le vinylméthylether, l'allylamine ou choisis parmi au moins un desdits monomères ou leurs mélanges, polymérisés en présence d'au moins une matière minérale.

18. Procédé selon l'une des revendications 16 ou 17, **caractérisé en ce qu'**on ajoute de 0,01 % à 2 % en poids d'au moins un agent dispersant.

19. Procédé selon la revendication 16, **caractérisé en ce qu'**on ajoute de 0,01 % à 5 % en poids d'au moins un agent de mouillage.

20. Suspension aqueuse de particules pigmentaires auto-liantes contenant au moins une matière inorganique et au moins un liant, **caractérisée en ce qu'**elle est obtenue par le procédé selon une des revendications 1 à 15.

21. Suspension aqueuse de particules pigmentaires auto-liantes contenant au moins une matière inorganique et au moins un liant, obtenue par le procédé selon une des revendications 1 à 15, et **caractérisée en ce qu'**elle est auto-liante.

22. Suspension aqueuse de particules pigmentaires auto-liantes contenant au moins une matière inorganique et au moins un liant, selon l'une des revendications 20 ou 21, **caractérisée en ce qu'**elle contient entre 5 % et 80 % en poids de matières inorganiques, entre 1 % et 30 % en poids de liants, et entre 19 % et 94 % en poids d'eau, et préférentiellement, **en ce qu'**elle contient entre 20 % et 40 % en poids de matières inorganiques, entre 5 % et 20 % en poids de liants, et entre 40 % et 75 % en poids d'eau.

23. Dispersion aqueuse de particules pigmentaires auto-liantes contenant au moins une matière inorganique et au moins un liant, **caractérisée en ce qu'**elle est obtenue par le procédé selon une des revendications 16 à 19.

24. Dispersion aqueuse de particules pigmentaires auto-liantes contenant au moins une matière inorganique et au moins un liant, obtenue par le procédé selon une des revendications 16 à 19, et **caractérisée en ce qu'**elle est auto-liante.

25. Dispersion aqueuse de particules pigmentaires auto-liantes contenant au moins une matière inorganique et au moins un liant, selon l'une des revendications 23 ou 24, **caractérisée en ce qu'**elle contient entre 5 % et 80 % en poids de matières inorganiques, entre 1 % et 30 % en poids de liants, entre 19 % et 94 % en poids d'eau, entre 0,01 % et 2 % en poids d'au moins un agent dispersant et/ou entre 0,01 % et 5 % en poids d'au moins un agent de mouillage, et préférentiellement **en ce qu'**elle contient entre 20 % et 40 % en poids de matières inorganiques, entre 5 % et 20 % en poids de liants, entre 40 % et 75 % en poids d'eau, entre 0,01 % et 2 % en poids d'au moins un agent dispersant et/ou entre 0,01 % et 5 % en poids d'au moins un agent de mouillage.

26. Procédé selon une des revendications 1 à 15 **caractérisé en ce que** les particules pigmentaires auto-liantes formées à l'étape e) contiennent de 70 % à 97,5 % en poids d'au moins une matière inorganique et de 2,5 % à 30 % en poids d'au moins un liant.

27. Procédé selon la revendication 26 **caractérisé en ce que** les particules pigmentaires auto-liantes formées à l'étape e) contiennent de 85 % à 95 % en poids d'au moins une matière inorganique et de 5 % à 15 % en poids d'au moins un liant.

28. Procédé selon l'une des revendications 1 à 15 et selon l'une des revendications 26 ou 27 **caractérisé en ce que** le diamètre moyen des particules pigmentaires auto-liantes formées à l'étape e) est compris entre 5 µm et 100 µm tel que mesuré à partir d'un granulomètre MasterSizer™ S commercialisé par la société MALVERN.

29. Procédé selon la revendication 28 **caractérisé en ce que** le diamètre moyen des particules pigmentaires auto-liantes formées à l'étape e) est compris entre 10 µm et 30 µm tel que mesuré à partir d'un granulomètre MasterSizer™ S commercialisé par la société MALVERN.

30. Particules pigmentaires auto-liantes, contenant au moins une matière inorganique et au moins un liant, obtenues par le procédé selon l'une des revendications 1 à 19 et 26 à 29, **caractérisées en ce qu'**elles contiennent de 70 % à 97,5 % en poids d'au moins une matière inorganique et de 2,5 % à 30 % en poids d'au moins un liant, et préférentiellement **en ce qu'**elles contiennent entre 85 % et 95 % en poids d'au moins une matière inorganique et de 5 % à 15 % en poids d'au moins un liant.

## Patentansprüche

1. Verfahren zur Herstellung von selbstbindenden Pigmentpartikeln, trocken oder in wässriger Suspension oder Dispersion, umfassend die folgenden Schritte:
a) Bilden einer oder mehrerer wässriger Suspensionen von wenigstens einem anorganischen Material, und ihr Einbringen in eine Mühle im Hinblick auf Schritt c),
b) Bilden oder Nehmen einer oder mehrerer wässriger Lösungen oder Suspensionen oder Emulsionen von wenigstens einem Bindemittel, und ihr Einbringen in eine Mühle im Hinblick auf Schritt c),
c) Co-Vermahlen der in Schritt a) erhaltenen wässrigen Suspension bzw. Suspensionen mit den in Schritt b) erhaltenen wässrigen Lösungen oder Suspensionen oder Emulsionen, um eine wässrige Suspension von selbstbindenden Pigmentpartikeln zu erhalten,
d) gegebenenfalls Co-Vermahlen der in Schritt c) erhaltenen wässrigen Suspension mit einer oder mehreren wässrigen Lösungen oder Suspensionen oder Emulsionen von wenigstens einem Bindemittel,
e) gegebenenfalls Trocknen der in Schritt c) oder in Schritt d) erhaltenen wässrigen Suspension.

2. Verfahren nach Anspruch 1, **dadurch gekennzeichnet, dass** die in Schritt a) gebildete wässrige Suspension bzw. die in Schritt a) gebildeten wässrigen Suspensionen von anorganischem Material von 1 % bis 80 %, bezogen auf das Trockengewicht, an anorganischem Material enthalten.

3. Verfahren nach Anspruch 2, **dadurch gekennzeichnet, dass** die in Schritt a) gebildete wässrige Suspension bzw. die in Schritt a) gebildeten wässrigen Suspensionen von anorganischem Material von 15 % bis 60 %, bezogen auf das Trockengewicht, an anorganischem Material enthalten.

4. Verfahren nach eine, der Ansprüche 1 bis 3, **dadurch gekennzeichnet, dass** die in Schritt a) gebildete wässrige Suspension bzw. die in Schritt a) gebildeten wässrigen Suspensionen von anorganischem Material ein oder mehrere anorganische Materialien enthalten.

5. Verfahren nach Anspruch 4, **dadurch gekennzeichnet, dass** das anorganische Material ausgewählt ist bzw. die anorganischen Materialien ausgewählt sind aus Metalloxiden, Hydroxiden, Sulfiten, Silicaten und Carbonaten, wie Calciumcarbonat, Dolomiten, Kaolin, Talk, Gips, Titandioxid, Satinweiss oder Aluminiumhydroxid, oder deren Gemischen.

6. Verfahren nach Anspruch 5, **dadurch gekennzeichnet dass** das anorganische Material ausgewählt ist bzw. die anorganischen Materialien ausgewählt sind aus Calciumcarbonaten in natürlicher Form oder in gefällter Form, oder deren Gemischen.

7. Verfahren nach Anspruch 6, **dadurch gekennzeichnet, dass** das anorganische Material bzw. die anorganischen Materialien ein natürliches Calciumcarbonat ist bzw. sind, ausgewählt aus Kreide, Marmor, Calcit oder deren Gemischen.

8. Verfahren nach einem der Ansprüche 1 bis 7, **dadurch gekennzeichnet, dass** die in Schritt b) gebildeten wässrigen Lösungen oder Suspensionen oder Emulsionen von wenigstens einem Bindemittel von 1 Gew.-% bis 50 Gew.-% an wenigstens einem Bindemittel enthalten, und bevorzugter von 5 Gew.-% bis 20 Gew.-% an wenigstens einem Bindemittel.

9. Verfahren nach einem der Ansprüche 1 bis 8, **dadurch gekennzeichnet, dass** das bzw. die Bindemittel aus Schritt b) ausgewählt sind aus semikristallinen Latizes, oder aus Latizes in Emulsion oder den Lösungen von löslichen Bindemitteln, wie Polyvinylalkohol, Polyvinylacetat, Stärke, Casein, Proteinen, Carboxymethylcellulose (CMC), Ethylhydroxyethylcellulose (EHEC) oder deren Gemischen.

10. Verfahren nach Anspruch 9, **dadurch gekennzeichnet, dass** die semikristallinen Latizes bevorzugt ausgewählt sind aus Emulsionen von Polyethylenwachsen oder Copolymeren, in ihrer neutralisierten Form, von Polyethylen mit anderen Monomer-Einheiten, wie Acrylsäure, oder anderen Monomeren oder deren Gemischen.

11. Verfahren nach Anspruch 9, **dadurch gekennzeichnet, dass** die Latizes in Emulsion ausgewählt sind aus den Copolymeren von Acrylsäureestern.

12. Verfahren nach einem der Ansprüche 1 bis 11, **dadurch gekennzeichnet, dass** die in Schritt c) gebildete Suspension ein Verhältnis von in der erhaltenen Suspension enthaltenem anorganischem Material und Bindemitteln zwischen 99 und 1 aufweist, ausgedrückt in Gewichtsanteilen.

13. Verfahren nach Anspruch 12, **dadurch gekennzeichnet, dass** das Verhältnis von in der erhaltenen Suspension enthaltenem anorganischem Material und Bindemitteln zwischen 70 und 30 beträgt, ausgedrückt in Gewichtsanteilen.

14. Verfahren nach einem der Ansprüche 1 bis 13, **dadurch gekennzeichnet, dass** die so gebildeten selbstbindenden Pigmentpartikel einem mittleren Partikeldurchmesser von zwischen 0,1 µm und 10 µm aufweisen, gemessen durch Verwenden eines Master-Sizer™ S Korngrössenmessgeräts, verkauft von der Firma MALVERN.

15. Verfahren nach Anspruch 14, **dadurch gekennzeichnet, dass** die so gebildeten selbstbindenden Pigmentpartikel einem mittleren Partikeldurchmesser von zwischen 0,1 µm und 2 µm aufweisen, gemessen durch Verwenden eines MasterSizer™ S Korngrössenmessgeräts, verkauft von der Firma MALVERN.

16. Verfahren nach einem der Ansprüche 1 bis 15, **dadurch gekennzeichnet, dass** es die folgenden Schritte beinhaltet:
a) Bilden einer oder mehrerer wässriger Suspensionen von wenigstens einem anorganischen Material, und ihr Einbringen in eine Mühle im Hinblick auf Schritt c),
b) Bilden oder Nehmen einer oder mehrerer wässriger Lösungen oder Suspensionen oder Emulsionen von wenigstens einem Bindemittel, und ihr Einbringen in eine Mühle im Hinblick auf Schritt c),
c) Co-Vermahlen der in Schritt a) erhaltenen wässrigen Suspension bzw. Suspensionen mit den in Schritt b) erhaltenen wässrigen Lösungen oder Suspensionen oder Emulsionen, um eine wässrige Suspension von selbstbindenden Pigmentpartikeln zu erhalten,
d) gegebenenfalls Co-Vermahlen der in Schritt c) erhaltenen wässrigen Suspension mit einer oder mehreren wässrigen Suspensionen oder Emulsionen von wenigstens einem Bindemittel,
f) Erhöhen der Konzentration der in Schritt c) oder d) erhaltenen wässrigen Suspension durch thermische oder mechanische Konzentration,
g) Dispergieren der in Schritt f) erhaltenen wässrigen Suspension durch Verwenden von wenigstens einem Dispergierungsmittel und/oder wenigstens einem Benetzungsmittel.

17. Verfahren nach Anspruch 16, **dadurch gekennzeichnet, dass** das bzw. die Dispergierungsmittel ausgewählt sind aus Polymeren und/oder Acrylsäure- oder Vinyl- oder Allyl-Copolymeren, wie Homopolymere oder Copolymere in ihren vollständig sauren oder teilweise oder vollständig neutralisierten Formen durch Neutralisierungsmittel, die monovalente oder polyvalente Kationen oder Amine oder deren Gemische enthalten, aus wenigstens einem Monomer, wie Acrylsäure und/oder Methacrylsäure, Itaconsäure, Crotonsäure, Fumarsäure, Maleinsäureanhydrid oder Isocrotonsäure, Aconitsäure, Mesaconsäure, Sinapinsäure, Undecylensäure, Angelikasäure und/oder ihren entsprechenden Estern, wie Acrylate oder Methacrylate von Alkyl, Aryl, Alkylaryl, Arylalkyl, und insbesondere Ethylacrylat, Butylacrylat, Methylmethacrylat, Sulfonacrylamidopropansäure, Acrylamid und/oder Methacrylamid, Ethylenglycolacrylatphosphat, Ethylenglykolmethacrylatphosphat, Propylenglycolacrylatphosphat, Propylenglycolmethacrylatphosphat, Trimethylammoniumpropylmethacrylamidchlorid oder Trimethylammoniumpropylmethacrylamidsulfat, Trimethylammoniummethacrlyatethylchlorid oder Trimethylammoniummethacrlyatsulfat sowie ihre Acrylat- und Acrylamidhomologen, quaternär oder nicht, und/oder Dimethyldiallylchlorid, Vinylpyrrolidon, Vinylcaprolactam, Diisobutylen, Vinylacetat, Styrol, alpha-Methylstyrol, Natriumstyrolsulfonat, Vinylmethylether, Allylamin, oder ausgewählt aus wenigstens einem der Monomere oder deren Gemischen, polymerisiert in der Gegenwart von wenigstens einem Mineralstoffmaterial.

18. Verfahren nach einem der Ansprüche 16 oder 17, **dadurch gekennzeichnet, dass** von 0,01 Gew.-% bis 2 Gew.-% des wenigstens einen Dispergierungsmittels zugegeben werden.

19. Verfahren nach Anspruch 16, **dadurch gekennzeichnet, dass** von 0,01 Gew.-% bis 5 Gew.-% des wenigstens einen Benetzungsmittels zugegeben werden.

20. Wässrige Suspension von selbstbindenden Pigmentpartikeln, enthaltend wenigstens ein anorganisches Material und wenigstens ein Bindemittel, **dadurch gekennzeichnet, dass** es durch das Verfahren gemäss einem der Ansprüche 1 bis 15 erhältlich ist.

21. Wässrige Suspension von selbstbindenden Pigmentpartikeln, enthaltend wenigstens ein anorganisches Material und wenigstens ein Bindemittel, **dadurch gekennzeichnet, dass** es durch das Verfahren gemäss einem der Ansprüche 1 bis 15 erhältlich ist, **gekennzeichnet dadurch, dass** es selbstbindend ist.

22. Wässrige Suspension von selbstbindenden Pigmentpartikeln, enthaltend wenigstens ein anorganisches Material und wenigstens ein Bindemittel nach einem der Ansprüche 20 oder 21, **dadurch gekennzeichnet, dass** sie enthält: zwischen 5 Gew.-% und 80 Gew.-% anorganisches Material, zwischen 1 Gew.-% und 30 Gew.-% Bindemittel, und zwischen 19 Gew.-% und 94 Gew.-% Wasser, und bevorzugt enthält sie: zwischen 20 Gew.-% und 40 Gew.-% anorganisches Material, zwischen 5 Gew.-% und 20 Gew.-% Bindemittel, und zwischen 40 Gew.-% und 75 Gew.-% Wasser.

23. Wässrige Dispersion von selbstbindenden Pigmentpartikeln, enthaltend wenigstens ein anorganisches Material und wenigstens ein Bindemittel, **dadurch gekennzeichnet, dass** sie durch das Verfahren gemäss einem der Ansprüche 16 bis 19 erhalten wird.

24. Wässrige Dispersion von selbstbindenden Pigmentpartikeln, enthaltend wenigstens ein anorganisches Material und wenigstens ein Bindemittel, **dadurch gekennzeichnet, dass** sie durch das Verfahren gemäss einem der Ansprüche 16 bis 19 erhalten wird, **gekennzeichnet dadurch, dass** sie selbstbindend ist.

25. Wässrige Dispersion von selbstbindenden Pigmentpartikeln, enthaltend wenigstens ein anorganisches Material und wenigstens ein Bindemittel nach einem der Ansprüche 23 oder 24, **dadurch gekennzeichnet, dass** sie enthält: zwischen 5 Gew.-% und 80 Gew.-% anorganisches Material, zwischen 1 Gew.-% und 30 Gew.-% Bindemittel, zwischen 19 Gew.-% und 94 Gew.-% Wasser, zwischen 0,01 Gew.-% und 2 Gew.-% wenigstens eines Dispergierungsmittels und/oder zwischen 0,01 Gew.-% und 5 Gew.-% wenigstens eines Benetzungsmittels, und bevorzugt enthält sie: zwischen 20 Gew.-% und 40 Gew.-% anorganisches Material, zwischen 5 Gew.-% und 20 Gew.-% Bindemittel, zwischen 40 Gew.-% und 75 Gew.-% Wasser, und zwischen 0,01 Gew.-% und 2 Gew.-% wenigstens eines Dispergierungsmittels und/oder zwischen 0,01 Gew.-% und 5 Gew.-% wenigstens eines Benetzungsmittels.

26. Verfahren nach einem der Ansprüche 1 bis 15, **dadurch gekennzeichnet, dass** die in Schritt e) gebildeten selbstbindenden Pigmentpartikel von 70 Gew.-% bis 97,5 Gew.-% wenigstens eines anorganischen Materials und von 2,5 Gew.-% bis 30 Gew.-% wenigstens eines Bindemittels enthalten.

27. Verfahren nach Anspruch 26, **dadurch gekennzeichnet, dass** die in Schritt e) gebildeten selbstbindenden Pigmentpartikel von 85 Gew.-% bis 95 Gew.-% wenigstens eines anorganischen Materials und von 5 Gew.-% bis 15 Gew.-% wenigstens eines Bindemittels enthalten.

28. Verfahren nach einem der Ansprüche 1 bis 15 und nach einem der Ansprüche 26 oder 27, **dadurch gekennzeichnet, dass** der mittlere Durchmesser der in Schritt e) gebildeten selbstbindenden Pigmentpartikel zwischen 5 µm und 100 µm beträgt, gemessen durch Verwenden eines MasterSizer™ S Korngrössenmessgeräts, verkauft von der Firma MALVERN.

29. Verfahren nach Anspruch 28, **dadurch gekennzeichnet, dass** der mittlere Durchmesser der in Schritt e) gebildeten selbstbindenden Pigmentpartikel zwischen 10 µm und 30 µm beträgt, gemessen durch Verwenden eines MasterSizer™ S Komgrössenmessgeräts, verkauft von der Firma MALVERN.

30. Selbstbindende Pigmentpartikel, enthaltend wenigstens ein anorganisches Material und wenigstens ein Bindemittel, erhalten durch das Verfahren gemäss einem der Ansprüche 1 bis 19 und 26 bis 29, **dadurch gekennzeichnet, dass** sie enthalten: von 70 Gew.-% bis 97,5 Gew.-% wenigstens eines anorganischen Materials und von 2,5 Gew.-% bis 30 Gew.-% wenigstens eines Bindemittels, und bevorzugt enthalten sie: zwischen 85 Gew.-% und 95 Gew.-% wenigstens eines anorganischen Materials und von 5 Gew.-% bis 15 Gew.-% wenigstens eines Bindemittels.

## Claims

1. A process for the preparation of self-binding pigmentary particles, dry or in aqueous suspension or dispersion, including the following steps:
a) forming one or more aqueous suspensions of at least one inorganic material and introducing it or them into a mill for the purposes of step c)
b) forming or taking one or more aqueous solutions, suspensions or emulsions of at least one binder and introducing it or them into a mill for the purpose of step c)
c) co-grinding the aqueous suspension or suspensions obtained in step a) with the aqueous solutions, suspensions or emulsions obtained in step b) so as to obtain an aqueous suspension of self-binding pigmentary particles
d) possibly co-grinding the aqueous suspension obtained in step c) with one or more aqueous solutions, suspensions or emulsions of at least one binder
e) possibly drying the aqueous suspension obtained in step c) or in step d).

2. A process according to claim 1 **characterised in that** the aqueous suspension or suspensions of inorganic matter formed in step a) contain from 1 % to 80 % by dry weight of inorganic matter.

3. A process according to claim 2 **characterised in that** the aqueous suspension or suspensions of inorganic matter formed in step a) contain from 15 % to 60 % by dry weight of inorganic matter.

4. A process according to one of the claims 1 to 3 **characterised in that** the said aqueous suspension or suspensions of inorganic matter formed in step a) contain one or more inorganic materials.

5. A process according to claim 4 **characterised in that** the said inorganic materials are chosen from among the metallic oxides, the hydroxides, the sulphites, the silicates and the carbonates, such as calcium carbonate, the dolomites, kaolin, talc, gypsum, titanium dioxide, satin white or aluminium trihydroxide and their mixtures.

6. A process according to claim 5 **characterised in that** the said inorganic matter is chosen from among the calcium carbonates in the natural form or in the precipitated form or their mixtures.

7. A process according to claim 6 **characterised in that** the said inorganic matter is a natural calcium carbonate chosen from among chalk, marble, calcite, or their mixtures.

8. A process according to one of the claims 1 to 7 **characterised in that** the aqueous solutions, suspensions or emulsions of at least one binder formed in step b) contain from 1 % to 50 % by weight of at least one binder, and more preferentially from 5 % to 20 % by weight of at least one binder.

9. A process according to one of the claims 1 to 8 **characterised in that** the binder or binders of step b are chosen from among the semi-crystalline latexes, or from among the latexes in emulsion or the solutions of soluble binders such as polyvinyl alcohol, polyvinyl acetate, starch, casein, proteins, carboxymethyl cellulose (CMC), ethyl hydroxyethyl cellulose (EHEC), or their mixtures.

10. A process according to claim 9 **characterised in that** the semi-crystalline latexes are preferentially chosen from among the emulsions of polyethylene waxes or copolymers in their neutralised polyethylene form with other monomer units such as acrylic acid or other monomers or their mixtures.

11. A process according to claim 9 **characterised in that** the latex emulsions are chosen from among the copolymers of acrylic esters.

12. A process according to one of the claims 1 to 11 **characterised in that** the suspension formed in step c) has a ratio between the inorganic matter and binders contained in the suspension obtained that is between 99 and 1 expressed in parts by weight.

13. A process according to claim 12 **characterised in that** the ratio between the inorganic matter and the binders contained in the suspension obtained is between 70 and 30 expressed in parts by weight.

14. A process according to one of the claims 1 to 13 **characterised in that** the self-binding pigmentary particles thus formed have an average particle diameter of between 0.1 µm and 10 µm measured using a MasterSizer™ S granulometer sold by the company MALVERN.

15. A process according to claim 14 **characterised in that** the self-binding pigmentary particles thus formed have an average particle diameter of between 0.1 µm and 2 µm measured using a MasterSizer™ S granulometer sold by the company MALVERN.

16. Process according to one of the claims 1 to 15 **characterised in that** it includes the following steps:
a) forming one or more aqueous suspensions of at least one inorganic material and introducing it or them into a mill for the purposes of step c)
b) forming or taking one or more aqueous solutions, suspensions or emulsions of at least one binder and introducing it or them into a mill for the purpose of step c)
c) co-grinding the aqueous suspension or suspensions obtained in step a) with the aqueous solutions, suspensions or emulsions obtained in step b) so as to obtain an aqueous suspension of self-binding pigmentary particles
d) possibly co-grinding the aqueous suspension obtained in step c) with one or more aqueous solutions, suspensions or emulsions of at least one binder
f) increasing the concentration of the aqueous suspension obtained in step c) or d) by a method of thermal or mechanical concentration,
g) dispersing the aqueous suspension obtained in step f) by the use of at least one dispersing agent and/or at least one wetting agent.

17. Process according to claim 16 **characterized in that** the dispersing agent or agents are selected from among the acrylic or vinylic or allyl polymers and/or copolymers, such as the homopolymers or copolymers, in their totally acid or partially neutralised or totally neutralised form, by neutralisation agents containing monovalent or polyvalent cations or amines or their mixtures, of at least one of the monomers such as the acrylic and/or methacrylic, itaconic, crotonic, fumaric, maleic anhydride acids, or isocrotonic, aconitic, mesaconic, sinapic, undecylenic acid, angelic acid, and/or their respective esters, such as the alkyl, aryl, alkylaryl, arylalkyl acrylates or methacrylates and in particular such as ethyl acrylate, butyl acrylate, methyl methacrylate, acrylamido methyl propane sulphonic acid, the acrylamide and/or methacrylamide, ethylene glycol acrylate phosphate, ethylene glycol methacrylate phosphate, propylene glycol acrylate phosphate, propylene glycol methacrylate phosphate, methacrylamido propyl trimethyl ammonium chloride or sulphate, trimethyl ammonium methacrylate chloride or sulphate, as well as their acrylate and acrylamide homologs, whether quatemised or not, and/or dimethyldiallyl chloride, vinylpyrrolidone, vinylcaprolactame, diisobutylene, vinyl acetate, styrene, alpha-methyl-styrene, sodium sulfonate styrene, vinylmethylether, allylamine, or chosen from among at least one of the said monomers or their mixtures, polymerized in the presence of at least one mineral material.

18. A process according to one of the claims 16 or 17 **characterised in that** from 0.01 % to 2 % by weight of at least one dispersing agent is added.

19. A process according to claim 16 **characterised in that** from 0.01 % to 5 % by weight of at least one wetting agent is added.

20. An aqueous suspension of self-binding pigmentary particles containing at least one inorganic material and at least one binder **characterised in that** it is obtained by the process according to one of the claims 1 to 15.

21. An aqueous suspension of self-binding pigmentary particles containing at least one inorganic material and at least one binder obtained by the process according to one of the claims 1 to 15, **characterised in that** it is self-binding.

22. An aqueous suspension of self-binding pigmentary particles containing at least one inorganic material and at least one binder according to one of the claims 20 or 21 **characterised in that** it contains between 5 % and 80 % by weight of inorganic matter, between 1 % and 30 % by weight of binders, and between 19 % and 94 % by weight of water, and preferentially, **in that** it contains between 20 % and 40 % by weight of inorganic matter, between 5 % and 20 % by weight of binders, and between 40 % and 75 % by weight of water.

23. An aqueous dispersion of self-binding pigmentary particles containing at least one inorganic material and at least one binder **characterised in that** it is obtained by the process according to one of the claims 16 to 19.

24. An aqueous dispersion of self-binding pigmentary particles containing at least one inorganic material and at least one binder obtained by the process according to one of the claims 16 to 19, **characterised in that** it is self-binding.

25. An aqueous dispersion of self-binding pigmentary particles containing at least one inorganic material and at least one binder according to one of the claims 23 or 24, **characterised in that** it contains between 5 % and 80 % by weight of inorganic matter, between 1 % and 30 % by weight of binders, between 19 % and 94 % by weight of water, between 0.01 % and 2 % by weight of at least one dispersing agent and/or between 0.01 % and 5 % by weight of at least one wetting agent, and preferentially **in that** it contains between 20 % and 40 % by weight of inorganic matter, between 5 % and 20 % by weight of binders, between 40 % and 75 % by weight of water, between 0.01 % and 2 % by weight of at least one dispersing agent and/or between 0.01 % and 5 % by weight of at least one wetting agent.

26. A process according to one of the claims 1 to 15 **characterised in that** the self-binding pigmentary particles formed in step e) contain from 70 % to 97.5 % by weight of at least one inorganic material and from 2.5 % to 30 % by weight of at least one binder.

27. A process according to claim 26 **characterised in that** the self-binding pigmentary particles formed in step e) contain from 85 % to 95 % by weight of at least one inorganic material and from 5 % to 15 % by weight of at least one binder.

28. A process according to one of the claims 1 to 15 and according to one of the claims 26 or 27 **characterised in that** the average diameter of the self-binding pigmentary particles formed in step e) is between 5 µm and 100 µm as measured using a MasterSizer™ S granulometer sold by the company MALVERN.

29. A process according to claim 28 **characterised in that** the average diameter of the self-binding pigmentary particles formed in step e) is between 10 µm and 30 µm as measured using a MasterSizer™ S granulometer sold by the company MALVERN.

30. Self-binding pigmentary particles containing at least one inorganic material and at least one binder, obtained by the process according to one of the claims 1 to 19 and 26 to 29, **characterised in that** they contain from 70 % to 97.5 % by weight of at least one inorganic material and from 2.5 % to 30 % by weight of at least one binder, and preferentially **in that** they contain between 85 % and 95 % by weight of at least one inorganic material and from 5 % to 15 % by weight of at least one binder.
